# EUROPEAN PATENT APPLICATION

(11) **EP 1 323 764 A1**
(43) Date of publication of application: **02.07.2003**
(21) Application number: 01000780.5
(22) Date of filing: 20.12.2001
(51) Int. Cl.: C08G 61/12, C09D 165/00

(54) **Process for preparing an aqueous solution or dispersion of a polythiophene or thiophene copolymer**

(71) Applicant: AGFA-GEVAERT, 2640 Mortsel (BE)
(72) Inventor: Louwet, Frank, 2640, Mortsel (BE)

(57) **Abstract**

A process for preparing an aqueous solution or dispersion of a polythiophene or thiophene copolymer, containing structural units according to formula (I) : 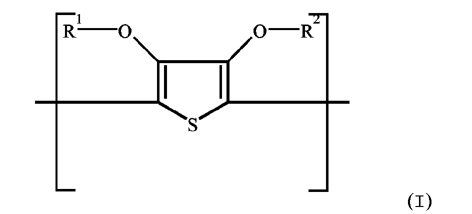 in which R¹ and R² independently of one another represent hydrogen or a C₁₋₅-alkyl group or together form an optionally substituted C₁₋₅-alkylene residue, comprising the step of: preparing the polythiophene or thiophene copolymer with an initiator in a reaction medium in the presence of polyanions under oxidizing or reducing conditions under an inert atmosphere such that when said initiator is added less than 3mg of oxygen per litre of the reaction medium is present in the reaction medium; an aqueous solution or dispersion prepared therewith; the use of an aqueous dispersion or solution comprising the aqueous dispersion or solution of a polythiophene or thiophene copolymer for coating an object; a printable paste containing the aqueous dispersion or solution of a polythiophene or thiophene copolymer; and an electroconductive or an antistatic layer prepared using an aqueous dispersion comprising the aqueous dispersion of a polythiophene or thiophene copolymer.

## Description

### Field of the invention

The present invention relates to a process for producing poly(3,4-dialkoxythiophene) polymers in the presence of a polyanion.

### Background of the invention.

Polythiophenes have been studied extensively due to their interesting electrical and/or optical properties. Polythiophenes become electrically conducting upon chemical or electrochemical oxidation or reduction.

EP-A 257 573 discloses an intrinsically electrically conductive polymer, wherein through connection in the 2-position and/or the 5-position are coupled to one another, statistically averaged from 60 to 100% by weight structural units, which are derived from at least one monomer of the formula (1): 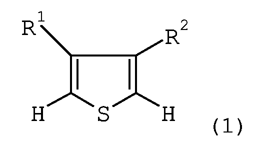 in which R¹ is a C₁₋₂-alkoxy group or -O(CH₂CH₂O)ₙCH₃ with n = 1 to 4 and R² is a hydrogen atom, a C₁₋₁₂-alkyl group, a C₁₋₁₂-alkoxy group or -O(CH₂CH₂O)ₙCH₃ with n = 1 to 4, or R¹ and R² together are -O(CH₂)ₘ-CH₂- or -O(CH₂)ₘ-O- with m = 1 to 12, 0 to 40% by weight structural units, which are derived from at least one monomer of the formula (2): 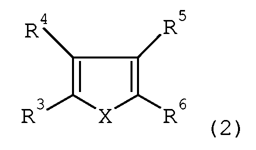 wherein R⁴ and R⁵ are independently of one another a hydrogen atom, a halogen atom, a C₁₋₁₂-alkyl group or aryl or together with C-atoms connected to them form an aromatic ring, R³ and R⁶ independently of one another represent a hydrogen atom or R³ together with R⁴ and the C-atoms connected to them or R⁵ together with R⁶ and the C-atoms connected to them each form an aromatic ring, X represents an oxygen atom, a sulphur atom, a =NH group, a =N-alkyl group or a =N-aryl group, 0 to 40% by weight structural units, which are derived from at least one monomer of formula (3): 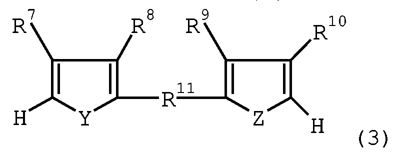 where R⁷, R⁸, R⁹ and R¹⁰ independently of one another represent a hydrogen atom, a C₁₋₁₂-alkyl group, a C₁₋₁₂-alkoxy group or an aryl group, Y and Z independently of one another represent an oxygen atom, a sulfur atom, a =NH group, a =N-alkyl group or a =N-aryl group, R¹¹ represents an arylene group, a heteroarylene group or a conjugated system of the formula (CH=CH)ₒ, wherein o is 1, 2 or 3, 0 to 40& by weight structural units, which are derived from at least one monomer of formula (4): 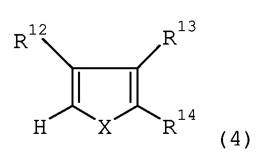 wherein R¹² and R¹³ independently of one another represent a hydrogen atom, a halogen atom, a C₁₋₁₂-alkyl group, a C₁₋₁₂-alkoxy group, a C₁₋₄-alkylamino group or a C₁₋₄-acylamino group, R¹⁴ represents a halogen atom, a C₁₋₁₂-alkyl group, a C₁₋₁₂-alkoxy group, a C₁₋₄-alkylamino group or a C₁₋₄-acylamino group and X has the meaning given above, wherein the polymer in the oxidized form is completely soluble in dipolar aprotic solvents at 25°C and solutions with a content of at least 0.1g of the polymer in 100 mL solvent at 25°C are obtained.

EP-A 339 340 discloses a polythiophene containing structural units of the formula: 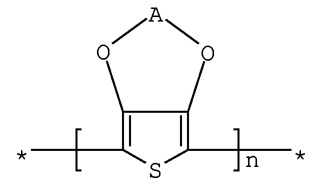 in which A denotes an optionally substituted C₁₋₄-alkylene radical and its preparation by oxidative polymerization of the corresponding thiophene.

EP-A 440 957 discloses dispersions of polythiophenes, constructed from structural units of formula (I): 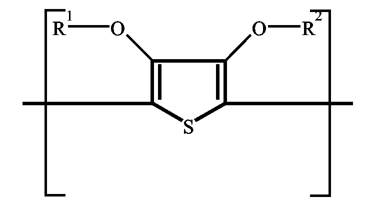 in which R ¹ and R² independently of one another represent hydrogen or a C₁₋₄-alkyl group or together form an optionally substituted C₁₋₄-alkylene residue, in the presence of polyanions. In Example 3 air is bubbled through the polymerizing solution.

Furthermore, Walsh et al. in 1999 in Macromolecules, volume 32, pages 2397-2399 reported the preparation of 3-substituted heteroaryl polythiophene by chemical polymerization using 4 molar equivalents of FeCl₃ in chloroform at 50°C under a slow purge of dry air; and Pomerantz et al. in 1991 in Synthetic Metals, volumes 41-43, pages 825-830 reported the preparation of poly(3-alkylthiophenes) using anhydrous FeCl₃ in chloroform while dry air was bubbled through the reaction mixture.

However, electropolymerization of polymers, such as polymers of 5-membered heterocyclic compounds containing 1 atom of an element from the O or N group, is classically carried out under a blanket of inert gas, see, for example, JP 59-210947 and Zhang et al. in 2001 in Journal of Solid State Electrochemistry, volume 5, pages 74-79.

A general drawback of conductive polymers which have been prepared and studied up to now, is that their conductivities are still too low for certain applications, their visible light transmittances are insufficiently high, their stability to visible and UV light exposure is too low and/or they are not processable.

### Objects of the invention.

It is therefore an aspect of the present invention to provide polythiophenes and thiophene copolymers which exhibit high electrical conductivities, high visible light transmittances, high stability to visible and UV light exposure and good processability.

Further aspects and advantages of the invention will become apparent from the description hereinafter.

### Summary of the invention

Classically polythiophenes have been polymerized in the presence of air, even with air bubbled through the reaction mixture. It has been surprisingly found that polythiophenes or copolymers of thiophenes oxidatively or reductively polymerized under an inert gas atmosphere in the presence of a polyanion, such as poly(styrenesulphonic acid) in an aqueous medium such that less than 3 mg of oxygen is present per litre of reaction medium, exhibit increased conductivity and improved stability.

Aspects of the present invention are realized with a process for preparing an aqueous solution or dispersion of a polythiophene or thiophene copolymer, containing structural units according to formula (I) : 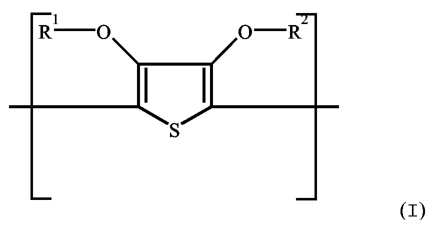 in which R ¹ and R² independently of one another represent hydrogen or a C₁₋₅-alkyl group or together form an optionally substituted C₁₋₅-alkylene residue, comprising the step of: preparing the polythiophene or thiophene copolymer with an initiator in a reaction medium in the presence of polyanions under oxidizing or reducing conditions under an inert atmosphere such that when said initiator is added less than 3mg of oxygen per litre of the reaction medium is present in the reaction medium.

Aspects of the present invention are also realized with an aqueous solution or dispersion of a polythiophene or thiophene copolymer obtainable by the above-disclosed process.

Aspects of the present invention are also realized by providing the use of an aqueous solution or dispersion comprising the above-disclosed aqueous solution or dispersion of a polythiophene or thiophene copolymer.

Aspects of the present invention are also realized with a printable paste containing the above-disclosed aqueous solution or dispersion of a polythiophene or thiophene copolymer.

Aspects of the present invention are also realized with an electroconductive layer prepared using an aqueous solution or dispersion comprising the above-disclosed aqueous dispersion of a polythiophene or thiophene copolymer.

Aspects of the present invention are also realized with an antistatic layer prepared using an aqueous solution or dispersion comprising an aqueous dispersion of a polythiophene or thiophene copolymer.

Further aspects of the present invention are disclosed in the dependent claims.

### Detailed description of the invention.

### Definitions

The term C₁₋₅-alkylene group represents methylenedioxy, 1,2-ethylenedioxy, 1,3-propylenedioxy, 1,4-butylenedioxy and 1,5-pentylenedioxy groups.

The term initiator means a species capable of initiating polymerization.

The term alkyl means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethylpropyl, 2,2-dimethylpropyl and 2-methyl-butyl etc.

The term aqueous for the purposes of the present invention means containing at least 60% by volume of water, preferably at least 80% by volume of water, and optionally containing water-miscible organic solvents such as alcohols e.g. methanol, ethanol, 2-propanol, butanol, iso-amyl alcohol, octanol, cetyl alcohol etc.; glycols e.g. ethylene glycol; glycerine; N-methyl pyrrolidinone; methoxypropanol; and ketones e.g. 2-propanone and 2-butanone etc.

The term conductive layer as used in disclosing the present invention includes both electroconductive coatings and antistatic layers.

The term electroconductive means having a surface resistance below 10⁶ Ω/square.

The term antistatic means having a surface resistance in the range from 10⁶ to 10¹¹ Ω/square meaning it cannot be used as an electrode.

The term "conductivity enhancement" refers to a process in which the conductivity is enhanced e.g. by contact with high boiling point liquids such as di- or polyhydroxy- and/or carboxy groups or amide or lactam group containing organic compound optionally followed by heating at elevated temperature, preferably between 100 and 250°C, during preferably 1 to 90 seconds, results in conductivity increase. Alternatively in the case of aprotic compounds with a dielectric constant ≥ 15, e.g. N-methyl-pyrrolidinone, temperatures below 100°C can be used. Such conductivity enhancement is observed with polythiophenes and can take place during the preparation of the outermost layer or subsequently. Particularly preferred liquids for such treatment are N-methyl-pyrrolidinone and diethylene glycol such as disclosed in EP-A 686 662 and EP-A 1 003 179.

PEDOT as used in the present disclosure represents poly(3,4-ethylenedioxythiophene).

EDOT as used in the present disclosure represents 3,4-ethylenedioxythiophene.

ADOT as used in the present disclosure represents 3,4-alkylenedioxythiophene).

PSS as used in the present disclosure represents poly(styrenesulphonic acid) or poly(styrenesulphonate).

PET as used in the present disclosure represents poly(ethylene terephthalate).

### Process for preparing an aqueous solution or dispersion of a polythiophene or thiophene copolymer

Aspects of the present invention are realized with a process for preparing an aqueous solution or dispersion of a polythiophene or thiophene copolymer, containing structural units according to formula (I) : 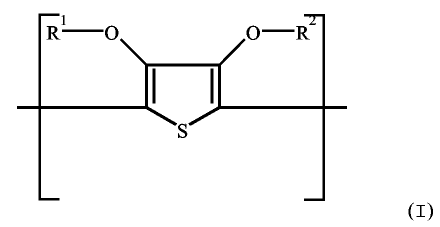 in which R ¹ and R² independently of one another represent hydrogen or a C₁₋₅-alkyl group or together form an optionally substituted C₁₋₅-alkylene residue, comprising the step of: preparing the polythiophene or thiophene copolymer with an initiator in a reaction medium at 25°C and atmospheric pressure in the presence of polyanions under oxidizing or reducing conditions under an inert atmosphere such that when said initiator is added less than 3mg of oxygen per litre of the reaction medium is present in the reaction medium.

According to a first embodiment of the process, according to the present invention, comprising the step of: preparing the polythiophene or thiophene copolymer with an initiator in a reaction medium at 25°C and atmospheric pressure in the presence of polyanions under oxidizing or reducing conditions under an inert atmosphere such that when said initiator is added less than 1.5 mg of oxygen per litre of the reaction medium is present in the reaction medium.

According to a second embodiment of the process, according to the present invention, comprising the step of: preparing the polythiophene or thiophene copolymer with an initiator in a reaction medium at 25°C and atmospheric pressure in the presence of polyanions under oxidizing or reducing conditions under an inert atmosphere such that when said initiator is added less than 0.5 mg of oxygen per litre of the reaction medium is present in the reaction medium.

The concentration of oxygen in the reaction medium can be regulated by any means e.g. freeze-thaw techniques, prolonged bubbling of an inert gas such as argon, nitrogen or helium through the reaction medium, consumption of oxygen in a sacrificial reaction under an inert gas blanket.

According to a third embodiment of the process, according to the present invention, the inert atmosphere is a nitrogen, helium or argon atmosphere.

According to a fourth embodiment of the process, according to the present invention, the structural units according to formula (I) are selected from the group consisting of optionally alkyl group-substituted 3,4-methylenedioxy-thiophene units, optionally alkyl or aryl-group-substituted 3,4-ethylenedioxythiophene units, optionally alkyl or aryl-group-substituted 3,4-ethylenedioxythiophene units, a unit according to formula (I) in which R¹ and R² are together a 1,2-cyclohexene group, optionally alkyl or aryl-group-substituted 3,4-propylenedioxythiophene units, optionally alkyl or aryl-group-substituted 3,4-butylenedioxythiophene units and optionally alkyl or aryl-group-substituted 3,4-pentylenedioxythiophene units.

According to a fifth embodiment of the process, according to the present invention, the thiophene copolymer is a copolymer of at least one 3,4-alkylenedioxythiophene compound with a solubility in water at 25°C of less than 2.2 g/L with at least one 3,4-alkylenedioxythiophene compound with a solubility in water at 25°C of at least 2.2 g/L and a polyanion.

According to a sixth embodiment of the process, according to the present invention, the 3,4-alkylenedioxythiophene compound with a solubility in water at 25°C of at least 2.2 g/L is selected from the group consisting of: 3,4-dihydro-2*H*-thieno[3,4-*b*][1,4]dioxin-2-yl)methanol, 3,4-dihydro-2*H*-thieno[3,4-*b*][1,4]dioxepin-3-ol, (2,3-dihydro-thieno[3,4-*b*][1,4]dioxin-2-yl-methoxy)-acetic acid ethyl ester, (2,3-dihydro-thieno[3,4-*b*][1,4]dioxin-2-yl-methoxy)-acetic acid, 2-{2-[2-(2-methoxy-ethoxy)-ethoxy]-ethoxymethyl}-2,3-dihydro-thieno[3,4-*b*][1,4]dioxine and 4-(2,3-dihydro-thieno[3,4-b][1,4]dioxin-2-ylmethoxy)-butane-1-sulfonic acid sodium salt.

The oxidation agents used for the oxidative polymerisation of pyrrole, such as described for example in Journal of the American Chemical Society, volume 85, pages 454-458 (1963) and J. Polymer Science Part A Polymer Chemistry, volume 26, pages 1287-1294 (1988), can be utilized for the oxidative polymerization of thiophenes.

According to a seventh embodiment of the process, according to the present invention, the polymerization is oxidative and the inexpensive and easily accessible oxidation agents used for initiating the polymerization are selected from the group consisting of iron(III) salts such as FeCl₃, the iron(III) salts of organic acids, e.g. Fe(OTs)₃, H₂O₂, K₂Cr₂O₇, alkali and ammonium persulphates, alkali perborates and potassium permanganate.

Theoretically the oxidative polymerization of thiophenes requires 2.25 equivalents of oxidation agent per mole thiophene of formula (I) [see e.g. J. Polymer Science Part A Polymer Chemistry, volume 26, pages 1287-1294 (1988)]. In practice an excess of 0.1 to 2 equivalents of oxidation agent is used per polymerizable unit. The use of persulphates and iron(III) salts has the great technical advantage that they do not act corrosively. Furthermore, in the presence of particular additives oxidative polymerization of the thiophene compounds according to formula (I) proceeds so slowly that the thiophenes and oxidation agent can be brought together as a solution or paste and applied to the substrate to be treated. After application of such solutions or pastes the oxidative polymerization can be accelerated by heating the coated substrate as disclosed in US 6,001,281 and WO 00/14139 herein incorporated by reference.

Reductive polymerization can be carried out using Stille (organotin) routes or Suzuki (organoboron) routes as disclosed in 2001 in Tetrahedron Letters, volume 42, pages 155-157 and in 1998 in Macromolecules, volume 31, pages 2047-2056 respectively or with nickel complexes as disclosed in 1999 in Bull. Chem. Soc. Japan, volume 72, page 621 and in 1998 in Advanced Materials, volume 10, pages 93-116.

### Oxygen measurements

The oxygen concentration can be measured with a Knick Process Unit 73 O₂, using InPro 6000 Series O₂ sensors, available from Mettler Toledo. These sensors are based on a polarographic oxygen measurement. The Clark polarographic sensor consists basically of a working electrode (cathode), a counter/reference electrode (anode), and an oxygen-permeable membrane that separates the electrodes from the medium. The transmitter supplies a constant polarization voltage to the cathode, needed to reduce oxygen. The oxygen molecules that migrate through the membrane are reduced at the cathode. At the same time oxidation takes place at the anode and oxidized anode metal (silver) is liberated into the electrolyte. The electrolyte closes the electric circuit between the anode and the cathode (ion conductivity). The current, produced in this way, is measured by the transmitter and is proportional to the partial pressure of oxygen (O₂) in the sample medium.

The amount of oxygen in an aqueous 6wt% aqueous solution of poly(styrenesulphonic acid) determined via this technique is 6.5mg/L.

A poly(styrenesulphonic acid) solution at 25°C and 1013 mbar saturated with oxygen by bubbling oxygen through it has an oxygen content of 38,45mg/L. This value may be regarded as the max solubility of oxygen in a poly(styrenesulphonic acid) solution at 25°C and 1013mbar.

### Structural units according to formula (I):

Thiophene monomers corresponding to structural units according to formula (I): 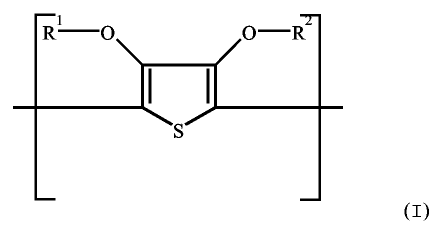 in which R ¹ and R² independently of one another represent hydrogen or a C₁₋₅-alkyl group or together form an optionally substituted C₁₋₅-alkylene residue, can be prepared by known methods such the transetherification reaction disclosed in DE 3804522 and in HOUBEN-WEYL, volume VI/3, part 3, pages 171-173 (1971) using a thiophene derivative such as 3,4-dimethoxythiophene, or the double Williamson reaction as disclosed in 1994 in Electrochimica Acta in volume 39, pages 1345-1347 using a thiophene derivative such as the dimethyl ester of 3,4-dihydroxythiophene-2,5-dicarboxylic acid.

### Polyanion compound

The polyanion compounds for use in the dispersion according to the present invention are disclosed in EP-A 440 957 and include polymeric carboxylic acids, e.g. polyacrylic acids, polymethacrylic acids, or polymaleic acids and polysulphonic acids, e.g. poly(styrenesulphonic acid). These polycarboxylic acids and polysulphonic acids can also be copolymers of vinylcarboxylic acids and vinylsulphonic acids with other polymerizable monomers, e.g. acrylic acid esters, methacrylic acid esters and styrene.

According to an eighth embodiment of the process, according to the present invention, the polyanion is poly(styrenesulphonic acid).

### Industrial application

Aqueous solutions or dispersions of polythiophenes and thiophene polymers exhibit high electrical conductivity together with low absorption of visible light and high absorption to infrared radiation. Aqueous solutions or dispersions comprising aqueous solutions or dispersions of polythiophenes and thiophene copolymers can be applied to a wide variety of rigid and flexible substrates, e.g. ceramics, glass and plastics, and are particularly suitable for flexible substrates such as plastic sheeting and the substrates can be substantially bent and deformed without the polythiophene or thiophene copolymer layer losing its electrical conductivity.

Such polythiophenes and thiophene copolymers can, for example, be utilized in photovoltaic devices, batteries, capacitors and organic and inorganic electroluminescent devices, in electromagnetic shielding layers, in heat shielding layers, in antistatic coatings for a wide variety of products including photographic film, thermographic recording materials and photothermographic recording materials, in smart windows, in electrochromic devices, in sensors for organic and bio-organic materials, in field effect transistors, in printing plates, in conductive resin adhesives and in free-standing electrically conductive films [see also chapter 10 of the Handbook of Oligo- and Polythiophenes, Edited by D. Fichou, Wiley-VCH, Weinheim (1999)].

The invention is illustrated hereinafter by way of comparative and invention examples. The percentages and ratios given in these examples are by weight unless otherwise indicated.

### PREPARATION OF 3,4-ALKYLENEDIOXYTHIOPHENE-HOMOPOLYMERS

### COMPARATIVE EXAMPLE 1

At 25°C, 562.5g of a 5.6% by weight aqueous solution of poly(styrenesulphonic acid) [PSS] (Mw=290,000), 2437.5g of deionized water and 12.78 g (90mmol) of EDOT were mixed in a 4L reaction vessel equipped with a stirrer. The concentration of oxygen in this solution was 6.5mg/L as measured with a Knick Process Unit 73 O₂, using InPro 6000 Series O₂ sensors. 0.225g Fe₂(SO₄)₃ 9H₂O and 25.7g Na₂S₂O₈ were then added to initiate the polymerization reaction. The reaction mixture was stirred at 25°C for 7h, after which a further 4.3g of Na₂S₂O₈ was added. After an additional reaction time of 16h the reaction mixture was treated 2 times with ion exchanger (300ml Lewatit™ S100MB + 500ml Lewatit™ M600MB from BAYER). The resulting mixture was additionally thermally treated at 95°C for 2h and the resulting viscous mixture treated with high shear (microfluidizer at 600Bar). This procedure yielded 1800g of a 1.09wt% blue dispersion.

### COMPARATIVE EXAMPLE 2

At 25°C, 562.5g of a 5.6% by weight aqueous solution of poly(styrenesulphonic acid) [PSS] (Mw=290,000), 2437.5g of deionized water and 12.78 g (90mmol) of EDOT were mixed in a 4L reaction vessel equipped with a stirrer and an oxygen inlet. After bubbling oxygen through this mixture for 30 minutes, 12.78 g (90mmol) of EDOT were added to this solution. The concentration of oxygen in this solution was 38.45mg/L as measured with a Knick Process Unit 73 O₂, using InPro 6000 Series O₂. 0.225g Fe₂(SO₄)₃ 9H₂O and 25.7g Na₂S₂O₈ was then added to initiate the polymerization reaction. The reaction mixture was stirred at 25°C for 7h, after which a further 4.3g of Na₂S₂O₈ was added. After an additional reaction time of 16h the reaction mixture was treated 2 times with ion exchanger (300ml Lewatit™ S100MB + 500ml Lewatit™ M600MB from BAYER). The resulting mixture was additionally thermally treated at 95°C for 2h and the resulting viscous mixture treated with high shear (microfluidizer at 600Bar). This procedure yielded 1760g of a 1.12wt% blue dispersion.

### INVENTION EXAMPLE 1

At room temperature, 438.23g of a 5.99% by weight aqueous solution of poly(styrenesulphonic acid) [PSS] (Mw=290,000) and 2061.77g deionized water were mixed in a 4L reaction vessel equipped with a stirrer and a nitrogen inlet. After bubbling nitrogen through this mixture for 30 minutes, 12.78 g (90mmol) of EDOT were added to this solution. The concentration of oxygen in this solution was 0.52mg/L as measured with a Knick Process Unit 73 O₂, using InPro 6000 Series O₂. 0.225g Fe₂(SO₄)₃ 9H₂O and 25.7g Na₂S₂O₈ were then added to initiate the polymerization reaction. The reaction mixture was stirred at 25°C for 7h, after which a further 4.3g of Na₂S₂O₈ was added. After an additional reaction time of 16h the reaction mixture was treated 2 times with ion exchanger (300ml Lewatit™ S100MB + 500ml Lewatit™ M600MB). The resulting mixture was additionally thermally treated at 95°C for 2h and the resulting viscous mixture treated with high shear (microfluidizer at 600Bar). This procedure yielded 1950g of a 1.02wt% blue dispersion of PEDOT 1.

### INVENTION EXAMPLE 2

At 25°C, 438.23g of a 5.99% by weight aqueous solution of poly(styrenesulphonic acid) [PSS] (Mw=290,000) were mixed with 2061.77g of deionized water in a 4L reaction vessel equipped with a stirrer and a nitrogen inlet. After bubbling nitrogen purging through this mixture for 30 minutes, 12.78 g (90mmol) of EDOT was added. The concentration of oxygen in this solution was 2.66mg/L as measured with a Knick Process Unit 73 O₂, using InPro 6000 Series O₂. 0.225g Fe₂(SO₄)₃ 9H₂O and 25.7g Na₂S₂O₈ were then added to initiate the polymerization reaction. The reaction mixture was stirred at 25°C for 7h, after which a further 4.3g of Na₂S₂O₈ was added. After an additional reaction time of 16h the reaction mixture was treated 2 times with ion exchanger (300ml Lewatit™ S100MB + 500ml Lewatit™ M600MB from BAYER). The resulting mixture was additionally thermally treated at 95°C for 2h and the resulting viscous mixture was treated with high shear (microfluidizer at 600Bar). This procedure yielded 1840g of a 1.03wt% blue dispersion of PEDOT 2.

### Preparing electroconductive layers with dispersions based on the dispersions of COMPARATIVE EXAMPLES 1 and 2 and INVENTION EXAMPLES 1 and 2

Coating dispersions were produced by adding 3-glycidoxypropyl-trimethoxysilane, ZONYL® FSO100, a copolymer latex of vinylidene chloride, methacrylate and itaconic acid (88/10/2) and N-methyl pyrrolidinone to the dispersions of COMPARATIVE EXAMPLES 1 and 2 and INVENTION EXAMPLES 1 and 2 so as to produce layers, upon doctor blade-coating onto a subbed 175µm poly(ethylene terephthalate) support and drying at 45°C for 3.5 minutes, with the following composition:

| | |
|---|---|
| PEDOT | 28.9mg/m² |
| [PEDOT)/PSS | 100 mg/m²] |
| ZONYL® FSO100 | 8 mg/m² |
| 3-glycidoxypropyl-trimethoxysilane | 100mg/m² |
| Copolymer latex of vinylidene chloride, methacrylate and itaconic acid (88/10/2) | 100mg/m² |
| N-methyl pyrrolidinone | 2mL/m² |

### Characterization of electroconductive layers prepared with dispersions based on the dispersions of COMPARATIVE EXAMPLES 1 and 2 and INVENTION EXAMPLES 1 and 2

The optical density of the layers was determined by measuring a stack of 10 strips with a Macbeth® TD904 densitometer using a visible filter and then obtaining therefrom the optical density of a single strip. The values given in Table 1 include the optical density of the PET-support.

The surface resistance of the layers was measured in a room conditioned to a temperature of 25°C and 30% relative humidity by contacting the printed layer with parallel copper electrodes each 35 mm long and 35 mm apart capable of forming line contacts, the electrodes being separated by a Teflon® insulator. This enabled a direct measurement of the surface resistance to be realized. The results are also summarized in Table 1.

The layers were then exposed to artificial sunlight (provided by a xenon lamp) through a glass filter in an Atlas Material Testing Technology BV, SUNTEST™ CPS apparatus according to DIN 54 004. The factor given in Table 1 is the ratio of surface resistance after x hours Suntest™ exposure to the surface resistance before the Suntest exposure.

**Table 1:**

| Example | quantity of oxygen in reaction medium mg/L | PEDOT/PSS concentration [wt%] | Initial surface resistance [Ohm/ square] | O.D. | Ratio of surface resisance after Suntest™ exposure to initial surface resistance | |
|---|---|---|---|---|---|---|
| | | | | | after 48 h exposure | after 96 h exposure |
| Comp 1 | 6.5 | 1.09 | 2900 | 0.067 | 83 | 11000 |
| Comp 2 | 38.45 | 1.11 | 21000 | 0.066 | 50 | 1646 |
| Inv 1 | 0.52 | 1.02 | 1200 | 0.066 | 13 | |
| Inv 2 | 2.66 | 1.03 | 1200 | 0.065 | 12 | |

The results in Table 1 show that the initial surface resistance and the stability of the PEDOT/PSS-layers is strongly dependent upon the quantity of oxygen in the reaction medium during the polymerization of 3,4-ethylenedioxythiophene in the presence of poly(styrenesulphonic acid), the lower the concentration of oxygen in the reaction medium the lower the surface resistance and the higher the stability to Suntest™ exposure as shown by lower ratios of surface resistance after Suntest™ exposure to the initial surface resistance.

### SYNTHESIS OF CO-MONOMERS

### Synthesis of 2-acetoxymethyl-2,3-dihydro-thieno[3,4-b][1,4]dioxine-5,7-dicarboxylic acid dimethyl ester

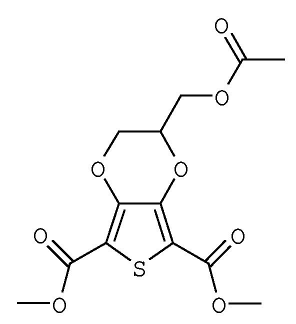

A 70/30 molar mixture of 2-acetoxymethyl-2,3-dihydro-thieno[3,4-*b*][1,4]dioxine-5,7-dicarboxylic acid dimethyl ester and 3-acetoxy-3,4-dihydro-2*H*-thieno[3,4-*b*][1,4]dioxepine-6,8-dicarboxylic acid dimethyl ester was obtained by performing the reaction between 3,4-dihydroxythiophene-2,5-dicarboxylic acid dimethyl ester and epibromohydrin as described in US 5,111,327. This mixture was subsequently separated by an acetylation/selective crystallization procedure: the 70/30 molar mixture of 2-acetoxymethyl-2,3-dihydro-thieno[3,4-b][1,4]dioxine-5,7-dicarboxylic acid dimethyl ester and 3-acetoxy-3,4-dihydro-2*H*-thieno[3,4-b][1,4]dioxepine-6,8-dicarboxylic acid dimethyl ester (143 g, 0.496 mol) was dissolved in methylene chloride (1.5 L). Triethylamine (80 mL) was subsequently added after which acetyl chloride (43 mL) was added dropwise, constantly keeping the reaction around 25°C by slight cooling. After addition the mixture was stirred for another hour at 25°C.

Subsequently, the reaction mixture was washed several times with 1M hydrochloric acid, a 1M aqueous solution of sodium hydrogen carbonate and a saturated aqueous solution of sodium chloride, respectively. The solvent was removed and the resulting solid was recrystallized from ethanol. After filtration and washing of the residue, pure 2-acetoxymethyl-2,3-dihydro-thieno[3,4-*b*][1,4]dioxine-5,7-dicarboxylic acid dimethyl ester was obtained as demonstrated by NMR and mass spectroscopy.

### Synthesis of 3-acetoxy-3,4-dihydro-2H-thieno[3,4-b][1,4]dioxepine-6,8-dicarboxylic acid dimethyl ester

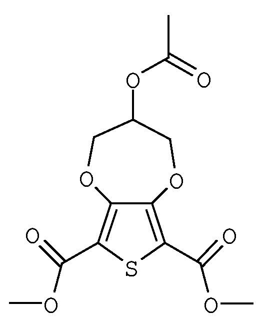

Its seven-membered ring isomer, 3-acetoxy-3,4-dihydro-2*H*-thieno[3,4-*b*][1,4]dioxepine-6,8-dicarboxylic acid dimethyl ester, could be isolated by concentrating the filtrate of the above-mentioned recrystallization process. The remaining residue, being a mixture of 2-acetoxymethyl-2,3-dihydro-thieno[3,4-*b*][1,4]dioxine-5,7-dicarboxylic acid dimethyl ester and 3-acetoxy-3,4-dihydro-2*H*-thieno[3,4-*b*][1,4]dioxepine-6,8-dicarboxylic acid dimethyl ester (molar ration ca. 1:2) was subsequently separated into the individual compounds by column chromatography using SiO₂ (eluant: CH₂Cl₂/ethylacetate = 90/10). This finally resulted in pure 3-acetoxy-3,4-dihydro-2*H*-thieno[3,4-*b*][1,4]dioxepine-6,8-dicarboxylic acid dimethyl ester as well as some additional pure 2-acetoxymethyl-2,3-dihydro-thieno[3,4-*b*][1,4]dioxine-5,7-dicarboxylic acid dimethyl ester.

### Synthesis of 2-hydroxymethyl-2,3-dihydro-thieno[3,4-b][1,4]dioxine-5,7-dicarboxylic acid

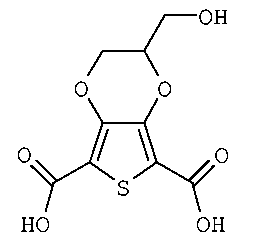

2-Acetoxymethyl-2,3-dihydro-thieno[3,4-*b*] [1,4]dioxine-5,7-dicarboxylic acid dimethyl ester (60 g, 0.18 mol) was dissolved in ethanol (680 mL). Potassium hydroxide (36 g) was added to this solution after which water (500 mL) was added upon continuous cooling. After addition of the water the reaction mixture was stirred for another 30 minutes after which the solvents were removed by distillation. To the remaining part of the reaction mixture, we dropwise added a mixture of ice (50 g) and concentrated hydrochloric acid (25 mL), and stirred. The mixture was then filtered and the residue was washed with water. Subsequent drying resulted in quantitative formation of pure 2-hydroxymethyl-2,3-dihydro-thieno [3,4-*b*] [1,4]dioxine-5,7-dicarboxylic acid as demonstrated by NMR and mass spectroscopy.

### Synthesis of 3-hydroxy-3,4-dihydro-2H-thieno[3,4-b][1,4]dioxepine-6,8-dicarboxylic acid

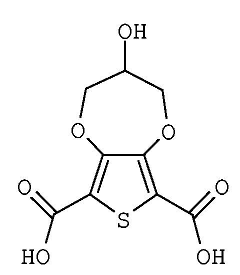

Pure 3-hydroxy-3,4-dihydro-2*H*-thieno[3,4-*b*][1,4]dioxepine-6,8-dicarboxylic acid was prepared analogously to the synthesis of 2-hydroxymethyl-2,3-dihydro-thieno[3,4-*b*][1,4]dioxine-5,7-dicarboxylic acid as described above and applying the same molar quantities of reagents.

### Synthesis of (2,3-dihydro-thieno[3,4-b][1,4]dioxin-2-yl)-methanol (M1)

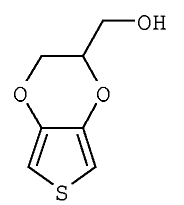

2-Hydroxymethyl-2,3-dihydro-thieno[3,4-*b*][1,4]dioxine-5,7-dicarboxylic acid (48 g, 0.184 mol) was dissolved in N,N-dimethylacetamide (500 mL), and Cu₂Cr₂O₇ (8.6 g) and quinoline (15 drops) were added. This mixture was subsequently stirred for 2 hours at 150°C, after which it was cooled to 25°C. It was then poured into ethyl acetate, the catalyst was removed by filtration and the filtrate was washed with acidic water and a saturated aqueous solution of sodium chloride. Subsequently, the solvent was removed after which pure (2,3-dihydro-thieno[3,4-*b*][1,4]dioxin-2-yl)-methanol was isolated by vacuum distillation (115-120°C; 0.05 mm Hg).

### Synthesis of 3,4-dihydro-2H-thieno[3,4-b][1,4]dioxepin-3-ol (M2)

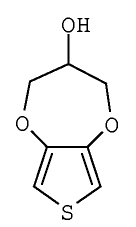

Pure 3,4-dihydro-2*H*-thieno[3,4-*b*][1,4]dioxepin-3-ol was prepared analogously to the synthesis of (2,3-dihydro-thieno[3,4-*b*][1,4]dioxin-2-yl)-methanol as described above and applying the same molar quantities of reagents. Purification was accomplished by column chromatography with SiO₂ (eluant: CH₂Cl₂).

### Synthesis of (2,3-dihydro-thieno[3,4-b][1,4]dioxin-2-ylmethoxy)-acetic acid ethyl ester (M3)

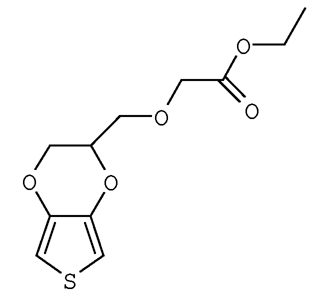

(2,3-Dihydro-thieno[3,4-*b*][1,4]dioxin-2-yl)-methanol (6.9 g, 40 mmol) was dissolved into tetrahydrofuran (100 mL), blanketed by nitrogen. Sodium hydride (1.9 g) was added in portions after which the reaction mixture was stirred for another 30 min. Then ethyl bromoacetate (5.3 mL) was added dropwise and stirring was continued for another hour at 25°C. The reaction mixture was then poured into ethyl acetate, washed with 1M hydrochloric acid, washed with a 1M aqueous solution of sodium hydrogen carbonate and concentrated. This resulted in quantitative formation of pure (2,3-dihydro-thieno[3,4-*b*][1,4]dioxin-2-ylmethoxy)-acetic acid ethyl ester as demonstrated by NMR and mass spectroscopy.

### Synthesis of (2,3-dihydro-thieno[3,4-b][1,4]dioxin-2-yl-methoxy)-acetic acid (M4)

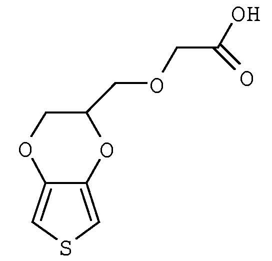

(2,3-Dihydro-thieno[3,4-*b*][1,4]dioxin-2-ylmethoxy)-acetic acid ethyl ester (10.2 g, 40 mmol) was dissolved into ethanol (100 mL) and water (50 mL), blanketed by nitrogen. Potassium hydroxide (2.9 g) was added and the mixture was heated at 35°C for 30 min. The solvents were then removed by distillation, ethyl acetate (50 mL), ice-water (50 mL) and concentrated hydrochloric acid (5 mL) were added and the mixture was vigorously stirred. Subsequently, the organic phase was separated, washed with a saturated solution of sodium chloride, dried with anhydrous magnesium sulphate and concentrated. Finally the raw product was recrystallized from ethyl acetate/hexanes (1/1) resulting in pure (2,3-dihydro-thieno[3,4-*b*][1,4]dioxin-2-ylmethoxy)-acetic acid as demonstrated by NMR and mass spectroscopy.

### Synthesis of 2-{2-[2-(2-methoxy-ethoxy)-ethoxy]-ethoxymethyl}-2,3-dihydro-thieno[3,4-b][1,4]dioxine (M5)

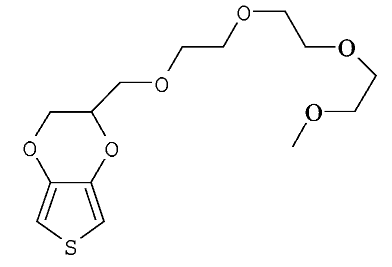

A transetherification reaction between 3,4-dimethoxythiophene (12.9 g, 89 mmol) and {2-[2-(2-methoxy-ethoxy)-ethoxy]-ethoxymethyl}-1,2-ethanediol (24.5 g) in toluene (150 mL) was performed by heating (at 100°C) a mixture of these compounds under a continuous nitrogen flow for 24 h. Subsequently, the reaction mixture was poured into methylene chloride (200 mL) and the organic phase was washed a 1M aqueous solution of sodium hydrogen carbonate, a concentrated aqueous solution of sodium chloride, dried with anhydrous magnesium sulphate and concentrated. This resulted in a viscous oil. Pure 2-{2-[2-(2-methoxy-ethoxy)-ethoxy]-ethoxymethyl}-2,3-dihydro-thieno[3,4-*b*][1,4]dioxine was finally obtained by vacuum distillation.

### Synthesis of polyethylene oxide substituted (2,3-dihydro-thieno[3,4-b][1,4]dioxin-2-yl)-methanol (M6)

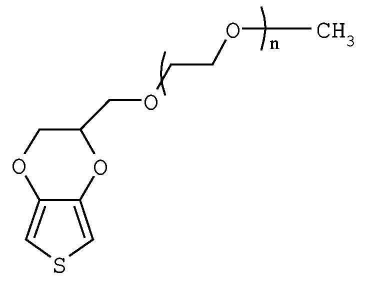

p-Toluenesulphonyl chloride (8.4 g, 44 mmol) was dissolved in pyridine (20 mL), blanketed by nitrogen. A solution of monohydroxy-functionalized polyethylene oxide (Mw = 750 g/mol, 15 g, 20 mmol) in pyridine (30 mL) was added dropwise, constantly keeping the reaction temperature around 25-30°C. After addition the reaction mixture was stirred for another 2 h and then poured into ice-water/hydrochloric acid. This aqueous phase was extracted with CH₂Cl₂ after which the combined organic fractions were washed with a 1M aqueous solution of sodium hydrogen carbonate. Final purification was done by column chromatography (SiO₂, eluant: CH₂Cl₂ and ethanol, respectively) resulting in pure tosylate functionalized polyethylene oxide.

(2,3-Dihydro-thieno[3,4-*b*][1,4]dioxin-2-yl)-methanol (1.0 g, 5.8 mmol) was dissolved in tetrahydrofuran (25 mL) and blanketed by nitrogen. Sodium hydride (0.25 g) was added and stirring was continued for 30 min. Then a solution of the tosylated polyethylene oxide (5.3 g) in tetrahydrofuran (25 mL) was added dropwise. After addition the reaction mixture was brought to reflux for 2 h after which it was cooled to 25°C again. The reaction mixture was then poured into ice-water (containing a few drops of concentrated hydrochloric acid) and extraction was performed using CH₂Cl₂. The combined organic fraction were then washed with a 1M aqueous solution of sodium hydrogen carbonate and a saturated aqueous solution of sodium chloride, dried with anhydrous magnesium sulphate and concentrated. Final purification by column chromatography (SiO₂, eluant: CH₂Cl₂/methanol (95/5)) resulted in pure PEO-substituted EDOT as was demonstrated with NMR and GPC.

### Synthesis of 4-(2,3-dihydro-thieno[3,4-b][1,4]dioxin-2-yl methoxy)-butane-1-sulfonic acid sodium salt (M7)

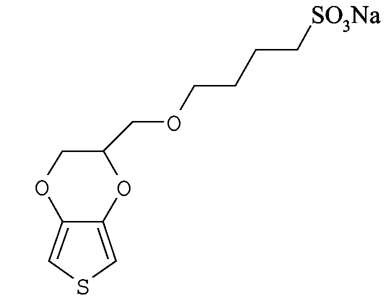

(2,3-Dihydro-thieno[3,4-*b*][1,4]dioxin-2-yl)-methanol (6.9 g, 40 mmol) was dissolved into tetrahydrofuran (100 mL) and blanketed by nitrogen. Sodium hydride (1.76 g) was added and stirring was continued for 30 min. Then butanesultone (6.0 g) was added dropwise after which the reaction mixture was brought to reflux for 3 h. Then it was cooled to 25°C again, the solvent was removed, methanol was added, the mixture was stirred, filtered and the filtrate was concentrated. The remaining oil was solidified by addition of hexanes and ethanol, followed by stirring. Final filtration and drying resulted in pure 4-(2,3-dihydro-thieno[3,4-b][1,4]dioxin-2-ylmethoxy)-butane-1-sulfonic acid sodium salt as was demonstrated by NMR and mass spectroscopy.

### PREPARATION OF 3,4-ALKYLENEDIOXYTHIOPHENE-COPOLYMERS

### INVENTION EXAMPLES 3 to 14

### Aqueous copolymerisation of EDOT with M1 (90/10mol%)in the presence of poly(styrenesulphonic acid) (CP1)

The dispersions of the 3,4-alkylenedioxythiophene copolymers of INVENTION EXAMPLES 3 to 14 were prepared by mixing 87g of a 5.99% aqueous solution of poly(styrenesulphonic acid) [PSS] (Mw=290,000) with 413g of deionized water at 25°C in a 1L reaction vessel equipped with a stirrer and a nitrogen inlet. After bubbling nitrogen through this mixture for 30 minutes, EDOT (for quantity see Tables 2A or 2B) and comonomer (for number and quantity see Tables 2A or 2B) were added to this solution. Nitrogen was then again bubbled through the reaction mixture for 30 minutes. 0.0375g Fe₂(SO₄)₃ and 4.28g Na₂S₂O₈ were then added to initiate the copolymerization reaction. The reaction mixture was stirred at 25°C for 7h, after which a further 0.7g of Na₂S₂O₈ was added. After an additional reaction time of 16h the reaction mixture was treated twice with ion exchanger (50ml Lewatit™ S100MB + 80ml Lewatit™ M600MB). The resulting mixture was additionally thermally treated at 95°C for 2h and the resulting viscous mixture diluted and treated with high shear (microfluidizer at 600Bar). This procedure yielded a dispersion of the copolymer (for type, quantity produced and concentration of copolymer in the dispersion see Tables 2A and 2B).

**Table 2A:**

| INVENTION EXAMPLE NUMBER | 3 | 4 | 5 | 6 | 7 | 8 |
|---|---|---|---|---|---|---|
| EDOT wt [g] | 1.92 | 1.7 | 1.92 | 1.7 | 1.92 | 1.7 |
| EDOT[mmoles] | 13.5 | 11.96 | 13.5 | 11.96 | 13.5 | 11.96 |
| Comonomer | M1 | M1 | M2 | M2 | M4 | M4 |
| Comonomer wt [g] | 0.258 | 0.516 | 0.258 | 0.516 | 0.345 | 0.69 |
| Comonomer [mmoles] | 1.49 | 3.00 | 1.49 | 3.00 | 1.49 | 3.00 |
| Copolymer dispersion | CP1 | CP2 | CP3 | CP4 | CP5 | CP6 |
| wt of (co)polymer dispersion prepared [g] | 570 | 470 | 560 | 495 | 450 | 455 |
| (co)polymer concentration in dispersion[wt %] | 0.78 | 0.82 | 0.82 | 0.83 | 0.76 | 1.14 |

**Table 2B:**

| INVENTION EXAMPLE NUMBER | 9 | 10 | 11 | 12 | 13 | 14 |
|---|---|---|---|---|---|---|
| EDOT wt [g] | 1.92 | 1.7 | 1.92 | 1.7 | 1.92 | 1.7 |
| EDOT[mmoles] | 13.5 | 11.96 | 13.5 | 11.96 | 13.5 | 11.96 |
| Comonomer | M5 | M5 | M6 | M6 | M7 | M7 |
| Comonomer wt [g] | 0.477 | 0.954 | 1.104 | 2.208 | 0.496 | 0.992 |
| Comonomer [mmoles] | 1.49 | 3.00 | 1.49 | 3.00 | 1.49 | 3.00 |
| Copolymer dispersion | CP7 | CP8 | CP9 | CP10 | CP11 | CP12 |
| wt of (co)polymer dispersion prepared [g] | 690 | 680 | 380 | 510 | 570 | 60 |
| (co)polymer concentration in dispersion[wt %] | 0.65 | 0.70 | 0.80 | 0.80 | 0.80 | 0.82 |

### Characterization of copolymers of INVENTION EXAMPLES 3 to 14

The molecular weights of the copolymers and the PEDOT of COMPARATIVE EXAMPLE 1 were determined by aqueous gel permeation chromatography relative to sodium poly(styrenesulphonate) with UV-vis absorption detection at 785 nm.

The molecular weights of the copolymers and PEDOT prepared in reaction media with less than 3 mg of oxygen per litre of reaction medium prior to the addition of initiator together with their concentrations in the dispersions produced and the theoretical concentration in mol% in the comonomer are summarized in Table 3.

**Table 3:**

| (Co)polymer nr. | Comonomer | | Concentration of Copolymer/PSS [wt%] | Molecular weight [785 nm] |
|---|---|---|---|---|
| | Nr. | mol% | | |
| PEDOT 1 | - | 0 | 1.02 | 490,000 |
| PEDOT 2 | - | 0 | 1.03 | 390,000 |
| CP1 | M1 | 10 | 0.78 | 620,000 |
| CP2 | M1 | 20 | 0.82 | 580,000 |
| CP3 | M2 | 10 | 0.82 | 670,000 |
| CP4 | M2 | 20 | 0.83 | 725,000 |
| CP5 | M4 | 10 | 0.76 | 560,000 |
| CP6 | M4 | 20 | 1.14 | 540,000 |
| CP7 | M5 | 10 | 0.65 | 650,000 |
| CP8 | M5 | 20 | 0.70 | 725,000 |
| CP9 | M6 | 10 | 0.8 | 430,000 |
| CP10 | M6 | 20 | 0.8 | 415,000 |
| CP11 | M7 | 10 | 0.80 | 750,000 |
| CP12 | M7 | 20 | 0.82 | 780,000 |

### Preparation of layers prepared with dispersions containing the copolymers of INVENTION EXAMPLES 3 to 14

Coating dispersions were prepared with the dispersions of INVENTION EXAMPLES 3 to 14 as described above for the dispersion of COMPARATIVE EXAMPLES 1 and 2 and INVENTION EXAMPLES 1 and 2 so as to produce layers, upon doctor blade-coating onto a subbed 175µm poly(ethylene terephthalate) support and drying at 45°C for 3.5 minutes, with the following composition:

| | |
|---|---|
| Copolymer of ADOT and comonomer (or PEDOT) | 28.9mg/m² |
| [copolymer of ADOT and comonomer (or PEDOT)/PSS | 100 mg/m²] |
| ZONYL® FSO100 | 8 mg/m² |
| 3-glycidoxypropyl-trimethoxysilane | 100mg/m² |
| copolymer latex of vinylidene chloride, methacrylate and itaconic acid (88/10/2) | 100mg/m² |
| N-methyl pyrrolidinone | 2mL/m² |

### Characterization of layers containing copolymers of INVENTION EXAMPLES 3 to 14

The surface resistance and optical density of the layers containing the copolymers of INVENTION EXAMPLES 3 to 14 was determined as described above for the layers containing the homopolymers of COMPARATIVE EXAMPLES 1 and 2 and INVENTION EXAMPLES 1 and 2. The results are summarized in Table 4.

The expected properties of the EDOT-copolymers are intermediate between those of the corresponding homopolymers. However, the layers containing copolymers CP1, CP2, CP3, CP4 and CP8, copolymers of EDOT with M1, M2 and M5, exhibited comparable properties to those of PEDOT 1 and PEDOT 2.

**Table 4:**

| Invention example nr | (Co)polymer nr | Comonomer | | Layer containing (co)polymer | | |
|---|---|---|---|---|---|---|
| | | nr. | mol% | Surface resistance [ohm/square] | Ratio of surface resistance after 48h Suntest™ exposure to initial surface resistance | O.D. |
| 1 | PEDOT 1 | - | 0 | 1200 | 13 | 0.066 |
| 2 | PEDOT 2 | - | 0 | 1200 | 12 | 0.065 |
| 3 | CP1 | M1 | 10 | 1300 | 21 | 0.068 |
| 4 | CP2 | M1 | 20 | 1400 | 27 | 0.068 |
| 5 | CP3 | M2 | 10 | 1300 | 24 | 0.067 |
| 6 | CP4 | M2 | 20 | 1200 | 20 | 0.067 |
| 7 | CP5 | M3 | 10 | 2200 | 74 | 0.060 |
| 8 | CP6 | M3 | 20 | 2500 | 72 | 0.063 |
| 9 | CP7 | M4 | 10 | 1700 | 38 | 0.067 |
| 10 | CP8 | M4 | 20 | 1300 | 24 | 0.067 |
| 11 | CP9 | M5 | 10 | 5800 | 91 | 0.067 |
| 12 | CP10 | M5 | 20 | 23000 | 1766 | 0.062 |
| 13 | CP11 | M6 | 10 | 1900 | 28 | 0.069 |
| 14 | CP12 | M6 | 20 | 1800 | 22 | 0.066 |

The present invention may include any feature or combination of features disclosed herein either implicitly or explicitly or any generalisation thereof irrespective of whether it relates to the presently claimed invention. In view of the foregoing description it will be evident to a person skilled in the art that various modifications may be made within the scope of the invention.

## Claims

1. A process for preparing an aqueous solution or dispersion of a polythiophene or thiophene copolymer, containing structural units according to formula (I): 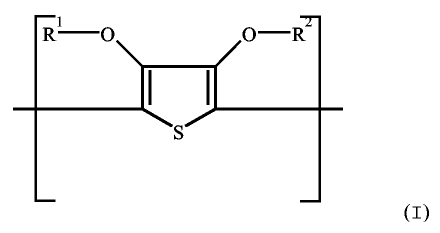 in which R ¹ and R² independently of one another represent hydrogen or a C₁₋₅-alkyl group or together form an optionally substituted C₁₋₅-alkylene residue, comprising the step of: preparing the polythiophene or thiophene copolymer with an initiator in a reaction medium in the presence of polyanions under oxidizing or reducing conditions under an inert atmosphere such that when said initiator is added less than 3mg of oxygen per litre of said reaction medium is present in said reaction medium.

2. Process according to claim 1, wherein when said initiator is added less than 1.5mg of oxygen per litre of said reaction medium is present in said reaction medium.

3. Process according to claim 1, wherein when said initiator is added less than 0.5mg of oxygen per litre of said reaction medium is present in said reaction medium.

4. Process according to any of the preceding claims, wherein said structural units according to formula (I) are selected from the group consisting of optionally alkyl group-substituted 3,4-methylenedioxy-thiophene units, optionally alkyl or aryl-group-substituted 3,4-ethylenedioxythiophene units, optionally alkyl or aryl-group-substituted 3,4-ethylenedioxythiophene units, a unit according to formula (I) in which R¹ and R² are together a 1,2-cyclohexene group, optionally alkyl or aryl-group-substituted 3,4-propylenedioxythiophene units, optionally alkyl or aryl-group-substituted 3,4-butylenedioxythiophene units and optionally alkyl or aryl-group-substituted 3,4-pentylenedioxythiophene units.

5. Process according to any of the preceding claims, wherein said thiophene copolymer is a copolymer of a 3,4-alkylenedioxythiophene compound with a solubility in water at 25°C of less than 2.2 g/L with a 3,4-alkylenedioxythiophene compound with a solubility in water at 25°C of at least 2.2 g/L and a polyanion.

6. Process according to claim 5, wherein said 3,4-alkylenedioxythiophene compound with a solubility in water at 25°C of at least 2.2 g/L is selected from the group consisting of: 3,4-dihydro-2H-thieno[3,4-b][1,4]dioxin-2-yl)methanol, 3,4-dihydro-2*H*-thieno[3,4-*b*][1,4]dioxepin-3-ol, (2,3-dihydro-thieno[3,4-*b*][1,4]dioxin-2-yl-methoxy)-acetic acid ethyl ester, (2,3-dihydro-thieno[3,4-*b*][1,4]dioxin-2-yl-methoxy)-acetic acid, 2-{2-[2-(2-methoxy-ethoxy)-ethoxy]-ethoxymethyl}-2,3-dihydro-thieno[3,4-*b*][14]dioxine and 4-(2,3-dihydro-thieno[3,4-*b*][1,4]dioxin-2-ylmethoxy)-butane-1-sulfonic acid sodium salt.

7. Process according to any of the preceding claims, wherein said polyanion is poly(styrenesulphonic acid).

8. Process according to any of the preceding claims, wherein said inert atmosphere is a nitrogen, helium or argon atmosphere.

9. An aqueous solution or dispersion of a polythiophene or thiophene copolymer obtainable by a process according to any of the preceding claims.

10. Use of an aqueous solution or dispersion comprising an aqueous solution or dispersion of a polythiophene or thiophene copolymer according to claim 9 for coating an object.

11. A printable paste containing an aqueous solution or dispersion of a polythiophene or thiophene copolymer according to claim 9.

12. An electroconductive layer prepared using an aqueous solution or dispersion comprising an aqueous dispersion of a polythiophene or thiophene copolymer according to claim 9.

13. An antistatic layer prepared using an aqueous solution or dispersion comprising an aqueous dispersion of a polythiophene or thiophene copolymer according to claim 9.
